# EUROPEAN PATENT APPLICATION

(11) **EP 1 093 301 A1**
(43) Date of publication of application: **18.04.2001**
(21) Application number: 99308028.2
(22) Date of filing: 12.10.1999
(51) Int. Cl.: H04N 5/325

(54) **Method of improving the quality of a fluoroscopic image**

(71) Applicant: GE MEDICAL SYSTEMS SA, 78533 Buc Cedex (FR)
(72) Inventor: Boutenko, Vladislav, 92100 Boulogne-Billancourt (FR); Hacquart, Hubert, 91570 Bièvres (FR); Callier, Bernard, 78960 Voisins-le-Bretonneux (FR); Kotian, Francois, 78390 Bois d'Arcy (FR)
(74) Representative: Goode, Ian Roy

(57) **Abstract**

A method for improving the quality of a fluoroscopic image where the image out of an image sequence of images which satisfies a predetermined minimum motion criterion is stored and this stored image is continuously displayed (6). The images may be acquired using a pulsed cardiac fluoroscope.

## Description

The invention relates to pulsed cardiac fluoroscopy and, more particularly, to improving the quality of a fluoroscopic image displayed continuously, that is to say, for example, when the operator takes his foot off the control pedal of the fluoroscopic image acquisition device.

Fluoroscopy consists in acquiring radiographic images (referred to below as fluoroscopic images) at a high rate, these being intended to be displayed a display screen. Fluoroscopy is, for display the path of probes injected directly on example, used into blood vessels.

There are several versions of fluoroscopy. In this regard, mention may be made of what is referred to as continuous fluoroscopy, characterized by continuous exposure of the patient to X-rays, and what is referred to as pulsed fluoroscopy, characterized by X-ray pulses which have a predetermined time width and are repeated at the frequency with which the pictures are taken.

Thus, in pulsed fluoroscopy, when the operator presses the control pedal of the device, X-ray pulses are emitted sequentially, each pulse making it possible to acquire one fluoroscopic image.

When the operator takes his foot off the pedal, a fluoroscopic image is then displayed continuously on the display screen, and this image needs to be as sharp as possible. However, the beating of the heart causes the patient's chest to move, which leads to blurring of the images displayed in cardiac fluoroscopy.

An embodiment of the invention provides for continuous display of a fluoroscopic image with the best possible sharpness, while minimizing the stresses experienced by the X-ray tube so as not to shorten its life.

An embodiment of the invention therefore provides a method of improving the quality of a fluoroscopic image displayed continuously following an image acquisition sequence in which the images are acquired using a pulsed cardiac fluoroscope, in which that image out of the sequence of images which satisfies a predetermined minimum motion criterion is stored and this stored image is continuously displayed.

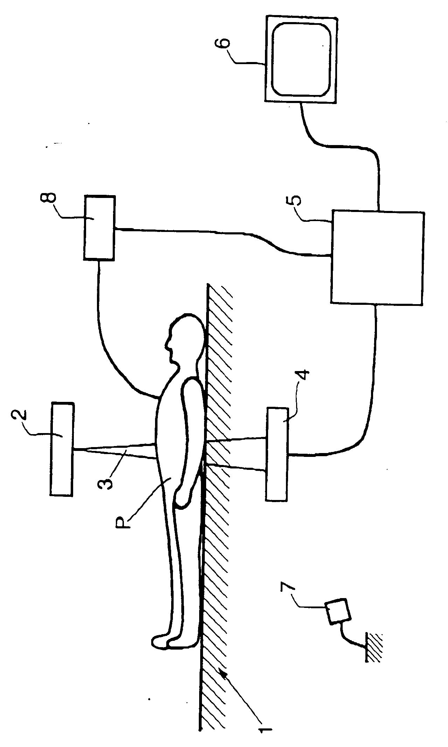

Other advantages and characteristics of the invention will become apparent on studying the detailed description of entirely non-limiting embodiments, and the appended drawing in which the single figure very schematically represents a system for acquiring fluoroscopic images.

In the single figure, reference 1 denotes a table supporting a patient P. An X-ray generator 2 emits X-ray pulses at regular time intervals when the acquisition pedal 7 of the device is depressed. When each pulse is emitted, an X-ray beam 3 passes through the patient and is received on a detector 4 connected to processing means 5 whose architecture is based on a microcomputer. The images which are acquired are displayed on a display screen 6.

According to a first embodiment of the invention, when the operator presses the pedal 7, X-ray pulses are successively emitted at predetermined time intervals with, for example, a pulse width of the order of 15 ms. The images which are acquired are displayed directly on the display screen 6 after having been processed by the processing means 5. When the operator takes his foot off the pedal 7, the processing means 5 supply the X-ray generator with a control signal whose effect is to reduce the length of the pulse emitted, from 15 ms to about 5 ms. Furthermore, since the X-ray dose per image must remain constant, the level of X-rays emitted on this last image is increased, which makes it possible to improve the sharpness of, this image which is acquired and displayed continuously on the screen 6.

The person skilled in the art will therefore note that the increased heating of the X-ray tube due to the shortening of the pulse occurs only on the last image, and this does not therefore shorten the life of the tube.

According to another embodiment of the invention, the processing means 5 carry out image processing on the images of the sequence, so as to store the one which satisfies a minimum blur criterion. More specifically, for example, image-to-image correlation processing may be carried out on small areas of the image. Maximum correlation between two successive images is representative of minimum movement between these two images. The image associated with maximum correlation is then stored in real time.

This image processing may be carried out image by image, or alternatively on all the images of the 10 last cardiac cycles, which are continually stored.

According to another variant of the invention, a sensor 8 may be used, for example a blood pressure sensor or alternatively a device for electrocardiograms, so as to detect a diastole termination time, that is to say a time when the heart moves the least. The sensor then emits a control signal to the processing means 5 which then stores, the image acquired at this time in a memory so as to display it continuously at the end of the acquisition of the image sequence, that is to say when the operator takes his foot off the pedal 7.

The image stored may be the last image of the sequence, that is to say the one acquired when the operator takes his foot off the control pedal of the device. In this alternative embodiment, the invention provides for increasing the level of X-rays emitted on this last image, then storing this image.

In this embodiment variant, increasing the level of the X-rays leads to a shorter pulse length for the last image. This increased stress which the tube experiences is thus limited at the time when the last image is acquired. This pulse length is for example reduced to 5 ms whereas it is kept at 15 ms throughout the rest of the acquisition sequence.

According to another variant of the invention, image processing is carried out on the images of the sequence so as to store the one which satisfies a minimum blur criterion. By way of indication, this image processing may consist in an image to image correlation over small regions. The maximum correlation between two successive images is then looked for.

According to another variant of the invention, a sensor, for example a blood pressure sensor or, alternatively, a device for recording an electrocardiogram, is used to detect a diastole to termination time corresponding to very little movement of the heart, and, in response to a control signal emitted by the sensor, the image acquired when this control signal is received is stored.

## Claims

1. A method for improving the quality of a fluoroscopic image displayed continuously following an image acquisition sequence comprising the steps of storing the image out of the said sequence of images which satisfies a predetermined minimum motion criterion, and continuously displaying (6) this stored image.

2. The method according to claim 1, wherein the level of X-rays (3) emitted is increased on the last image of the sequence and this image is stored.

3. The method according to claim 1, wherein the image processing (5) is carried out on the images of the sequence to store the image which satisfies a minimum blur criterion.

4. The method according to claim 1, wherein a sensor (8) is used to detect a diastole termination time, and, in response to a control signal emitted by the sensor, the image acquired when this control signal is received is stored.

5. The method according to claim 1, wherein the images are acquired using a pulse cardiac fluoroscope
